# EUROPÄISCHE PATENTSCHRIFT

(11) **EP 0 830 917 B1**
(45) Veröffentlichungstag und Bekanntmachung des Hinweises auf die Patenterteilung: **12.04.2000**
(21) Anmeldenummer: 97115427.3
(22) Anmeldetag: 06.09.1997
(51) Int. Cl.: B23Q 3/08, B23P 11/02

(54) **Vorrichtung zum Spannen von Werkzeugen im Schrumpfsitz**
Device for clamping tools by shrink fitting
Dispositif pour le serrage d'outil par frettage

(30) Priorität: 20.09.1996 DE 19638822
(43) Veröffentlichungstag der Anmeldung: 25.03.1998
(73) Patentinhaber: Marquart, Ingeborg, 78351 Bodman (DE)
(72) Erfinder: Marquart, Uwe, 78564 Reichenbach (DE)
(74) Vertreter: Gahlert, Stefan, Dr.-Ing.

(56) Entgegenhaltungen:
- EP-A- 0 577 929
- DE-A- 3 643 651
- US-A- 5 140 739
- PATENT ABSTRACTS OF JAPAN vol. 012, no. 027 (M-662), 27.Januar 1988 & JP 62 181841 A (MITSUBISHI ELECTRIC CORP), 10.August 1987

## Beschreibung

Die Erfindung betrifft eine Vorrichtung zum Spannen von Werkzeugen im Schrumpfsitz, mit
- einer Halterung zur Aufnahme einer Spanneinrichtung, wobei die Spanneinrichtung mit ihrer Längsachse im wesentlichen vertikal angeordnet ist und einen Befestigungsabschnitt zur Befestigung der Spanneinrichtung an der Werkzeugmaschine und einen thermisch aufweitbaren Schrumpfabschnitt mit einem Halteabschnitt zur Aufnahme des Werkzeuges im Schrumpfsitz umfaßt,
- einer Heizeinrichtung zur thermischen Aufweitung des Schrumpfabschnittes der Spanneinrichtung.

Eine derartige Vorrichtung ist aus der US-A-5 140 739 bekannt. Bei der bekannten Vorrichtung ist am unteren Ende der Spindel einer Werkzeugmaschine ein Adapter mit einer thermisch aufweitbaren zylindrischen Bohrung vorgesehen, in den nach ausreichender Erhitzung ein Werkzeug mit seinem Schaft von unten einführbar und im Schrumpfsitz aufnehmbar ist. Das Werkzeug ist hierbei in einem Transportarm mit seinem Schaft nach oben weisend an einem Finger gehalten, der durch eine Feder nach oben vorgespannt ist und in dem ferner ein Vibrator vorgesehen ist. Um das Werkzeug mit seinem Schaft in die zylindrische, thermisch aufweitbare Bohrung einspannen zu können, wird der Transportarm nach oben verfahren, bis das Werkzeug mit seinem Schaft von unten gegen die thermisch aufweisbare zylindrische Bohrung anschlägt und durch die Feder in Richtung auf die Bohrung vorgespannt ist. Wird nun die zylindrische Bohrung induktiv erhitzt, bis sich der Durchmesser ausreichend aufgeweitet hat, so bewegt sich das Werkzeug unter Wirkung der Federspannung und mit Unterstützung des Vibrators nach oben, bis der Schaft in die zylindrische Bohrung eingreift und diese anschließend wieder abgekühlt werden kann, um so das Werkzeug im Schrumpfsitz zu halten.

Die bekannte Vorrichtung weist einen komplizierten Aufbau auf und benötigt einen in Vertikalrichtung verfahrbaren und positionierbaren Transportarm nebst einer Federeinrichtung und eines Vibrators.

Eine weitere Vorrichtung zum Spannen von Werkzeugen im Schrumpfsitz ist aus der DE 42 15 606 C1 bekannt. Danach wird das Werkzeug in einem thermisch aufweitbaren Schrumpfabschnitt eines Spannfutters gespannt. Um während des Spannvorgangs eine Überhitzung zu vermeiden und eine besonders hohe Spannkraft zu gewährleisten, wird das Spannfutter zum Einspannen des Werkzeuges dabei in eine Spannvorrichtung eingesetzt, die rotierend angetrieben wird, während der Schrumpfabschnitt von außen mittels eines Gasbrenners thermisch aufgeweitet wird. Das Werkzeug, das in den Schrumpfabschnitt eingebracht werden soll, ist dabei in einer Aufnahmebüchse gehalten, die in bezug auf das Spannfutter zentriert ist, wozu geeignete Ansenkungen in der Aufnahmebüchse vorgesehen sind. Die Aufnahmebüchse ist gegen das Spannfutter elastisch beaufschlagt, um das Werkzeug, sobald der Schrumpfabschnitt ausreichend durch die Erhitzung der Gasflamme aufgeweitet ist, unmittelbar in den Schrumpfabschnitt einzustoßen.

Auf diese Weise wird durch den rotierenden Antrieb während der Erhitzung und durch die elastische Beaufschlagung des Werkzeuges eine gleichmäßige Erwärmung erreicht und eine Überhitzung vermieden.

Als relativ aufwendig hat es sich jedoch erwiesen, daß für verschiedene Werkzeugdurchmesser jeweils verschiedene Aufnahmebüchsen vorgesehen sein müssen, die zudem noch in bezug auf das Spannfutter, in das das Werkzeug eingebracht werden soll, zentriert werden müssen.

Der Erfindung liegt somit die Aufgabe zugrunde, eine Vorrichtung gemäß der eingangs genannten Art derart zu verbessern, daß diese möglichst einfach aufgebaut ist und der Einspannvorgang möglichst einfach gestaltet wird.

Diese Aufgabe wird bei einer Vorrichtung gemäß der eingangs genannten Art erfindungsgemäß dadurch gelöst, daß
- die Halterung zur Aufnahme der Spanneinrichtung von oben in einer solchen Stellung ausgebildet ist, daß der Schrumpfabschnitt nach oben weist, und
- am äußeren Ende des Schrumpfabschnittes ein Einführabschnitt vorgesehen ist, der ein Einsetzen des Werkzeuges mit seinem Schaft von oben erlaubt und dessen Innendurchmesser derart bemessen ist, daß das Werkzeug im kalten Zustand des Schrumpfabschnittes mit seinem Schaft in den Einführabschnitt einsetzbar und darin zentrierbar ist, so daß das Werkzeug mit seinem Schaft aus dem Einführabschnitt unter Schwerkrafteinfluß in den Halteabschnitt gleitet, sobald dieser ausreichend thermisch aufgeweitet ist.

Die Aufgabe der Erfindung wird auf diese Weise vollkommen gelöst.

Erfindungsgemäß wird der Aufbau der Vorrichtung somit erheblich vereinfacht, da das einzuspannende Werkzeug mit seinem Schaft einfach von oben in den noch kalten Einführabschnitt eingesetzt wird und dann unter Schwerkrafteinfluß nach ausreichender thermischer Aufweitung aus dem Einführabschnitt in den Halteabschnitt gleitet. Somit ergibt sich eine erhebliche Vereinfachung der Vorrichtung und ein besonders einfaches Einspannen des Werkzeuges im Schrumpfsitz.

Hierbei wird eine Aufnahme und Zentrierung des Werkzeugschaftes in bezug auf den Schrumpfabschnitt bereits im kalten Zustand durch den Einführabschnitt gewährleistet, der sich am äußeren Ende des Schrumpfabschnittes befindet. Somit wird eine externe Zentrierung des Werkzeugschaftes während des Einspannvorgangs in die Spanneinrichtung überflüssig. Darüber hinaus wird es vermieden, daß für unterschiedliche Schaftdurchmesser der Werkzeuge jeweils unterschiedliche Aufnahmebüchsen vorgesehen werden müssen.

In bevorzugter Weiterbildung der Erfindung geht der Einführabschnitt über einen konischen Bereich in den Halteabschnitt über.

Auf diese Weise wird der Einführvorgang des Werkzeuges mit seinem Schaft in den Halteabschnitt zusätzlich erleichtert.

In vorteilhafter Weiterbildung der Erfindung sind Mittel zum rotierenden Antrieb der Halterung um ihre Längsachse vorgesehen. Auf diese Weise wird eine gleichmäßige Erwärmung gewährleistet und eine lokale Überhitzung vermieden.

In zusätzlicher Weiterbildung der Erfindung ist oberhalb des Einführabschnittes noch eine externe Zentrierhilfe vorgesehen, etwa in Form eines verschwenkbaren Armes, an dem eine Zentrierbohrung vorgesehen ist, durch den der Werkzeugschaft in den Einführabschnitt von oben einsetzbar ist.

Dadurch wird vermieden, daß der Einführabschnitt allein die Halterung des Werkzeuges übernehmen muß, während die Spanneinrichtung rotierend angetrieben wird. Die Zentrierbohrung ist dabei vorzugsweise mit einem größeren lichten Durchmesser ausgestattet und verhindert lediglich ein Verkippen des Werkzeugschaftes. Für verschiedene Schaftdurchmesser können dabei am selben Schwenkarm verschiedene Zentrierbohrungen vorgesehen sein, die nach Einspannen der Spanneinrichtung in die Halterung lediglich in ihre Arbeitsposition geschwenkt werden müssen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erfindungsgemäße Vorrichtung zum Einspannen eines Werkzeuges mit seinem Schaft in einer Spanneinrichtung, die hierzu selbst eingespannt und rotierend angetrieben wird, in stark vereinfachter, schematischer Darstellung und
- Fig. 2: eine teilweise geschnittene Längsansicht einer Spanneinrichtung, die gegenüber der in Fig. 1 gezeigten Spanneinrichtung leicht abgewandelt ist.

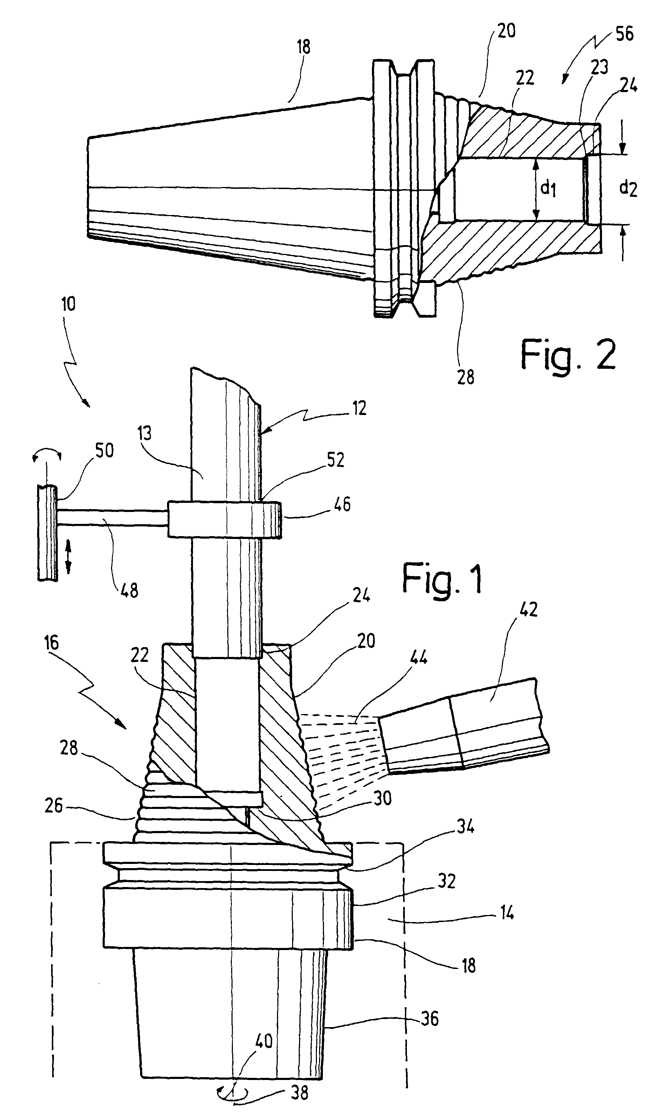

In Fig. 1 ist eine erfindungsgemäße Vorrichtung insgesamt mit der Ziffer 10 bezeichnet. Eine insgesamt mit der Ziffer 16 bezeichnete Spanneinrichtung, die als Spannfutter ausgebildet ist, umfaßt einen Befestigungsabschnitt 18, der zur Befestigung an einer Werkzeugmaschine dient und einen Schrumpfabschnitt 20, der thermisch aufweitbar ist, um ein Werkzeug 12 im Schrumpfsitz einspannen zu können. Die Ausgestaltung des Befestigungsabschnittes und dessen Größe sind von der Werkzeugmaschine abhängig, an der die Spanneinrichtung 16 verwendet werden soll.

Im gezeichneten Beispiel umfaßt der Befestigungsabschnitt 18 einen zylindrischen Abschnitt 32, in dem eine Ringnut 34 vorgesehen ist, sowie einen sich daran anschließenden Außenkonus 36.

Gleichermaßen sind Form und Größe des Schrumpfabschnittes 20 von der Bauart der Werkzeugaufnahme an der Werkzeugmaschine abhängig. Im gezeigten Beispiel umfaßt der Schrumpfabschnitt einen Außenkonus 26, der eine geriffelte Oberfläche 28 aufweist, um die Wärmeaufnahme und -verteilung beim Erhitzen des Schrumpfabschnittes 20 mittels einer Gasflamme 44 einer Heizeinrichtung 42 zu verbessern. Der Befestigungsabschnitt 20 umfaßt ferner eine zentrale zylindrische Bohrung, die als Halteabschnitt 22 dient und die mit einer Axialschulter 30 einen Anschlag für den Schaft 13 des Werkzeuges 12 bildet. Am äußeren Ende geht der Halteabschnitt 22, in dem die Haltekraft auf das später im Schrumpfsitz eingespannte Werkzeug 12 erzeugt wird, in einen Einführabschnitt 24 über, der einen etwas größeren Innendurchmesser als der Halteabschnitt 22 aufweist.

In Fig. 1 ist die Durchmesserdifferenz übertrieben dargestellt, um den stufenförmigen Übergang besser erkennbar zu machen.

Der Innendurchmesser des Halteabschnittes 24 ist derart bemessen, daß das Werkzeug 12 mit seinem Schaft 13 von oben in den noch kalten Einführabschnitt 24 der Spanneinrichtung 16 eingesetzt werden kann und dabei gleichzeitig zentriert ist.

Um das Einführen des Schaftes 13 in den Einführabschnitt 24 zu erleichtern, kann zusätzlich in einer ausreichenden Entfernung vom oberen Ende der senkrecht angeordneten Spanneinrichtung 16 noch eine Zentrierhilfe 46 vorgesehen sein, die etwa einen an einer Schwenkachse 50 gehaltenen Arm 48 mit einer Zentrierbohrung 52 aufweist, deren lichter Durchmesser etwas größer als der Durchmesser des Schaftes 13 ist.

Obwohl diese Zentrierhilfe 46 nicht unbedingt notwendig ist, wird durch sie ein schnelles Einführen des Schaftes 13 in den Einführabschnitt 24 erleichtert, wobei gleichzeitig eine Beschädigung durch Verkanten und dgl. verhindert wird. Für verschiedene Schaftdurchmesser 13 können an derselben Schwenkachse verschiedene Zentrierbohrungen vorgesehen sein, die nach Einspannen der Spanneinrichtung 16 in die Halterung 14 einfach in die entsprechende Position geschwenkt werden.

Zum Einspannen des Werkzeuges 12 in die Spanneinrichtung 16 wird nunmehr, nachdem das Werkzeug 12 mit seinem Schaft 13 in den Einführabschnitt 24 eingesetzt ist, die Halterung 14 um ihre vertikal angeordnete Längsachse 38 in Rotation versetzt, wie durch den Pfeil 40 angedeutet ist. Gleichzeitig wird die geriffelte Oberfläche 28 der Spanneinrichtung 16 durch die Gasflamme 44 der Heizeinrichtung 42 erwärmt. Sobald sich der Halteabschnitt 22 ausreichend thermisch aufgeweitet hat, gleitet das Werkzeug 12 unter Schwerkrafteinfluß mit seinem Schaft 13 in den Halteabschnitt 22 ein, bis es an der Axialschulter 30 zur Anlage kommt.

Nach dem Erkalten wird die Spanneinrichtung 16 aus der Halterung 14 ausgespannt, wozu die ggf. vorhandene Zentrierhilfe 46 zuvor nach oben vom Werkzeug 12 abgezogen und zur Seite verschwenkt wird.

Zum Ausspannen des Werkzeuges 12 wird die gesamte Halterung 14 vorzugsweise um 180 verschwenkt, so daß das Werkzeug 12 bei wiederum ausreichend aufgeweitetem Schrumpfabschnitt 20 unter Schwerkrafteinfluß der Spanneinrichtung 16 herausfällt und in geeigneter Weise aufgefangen werden kann.

In Fig. 2 ist eine leicht abgewandelte Ausführung der Spanneinrichtung dargestellt und insgesamt mit der Ziffer 56 bezeichnet. Dabei werden für entsprechende Teile entsprechende Bezugsziffern verwendet.

Abgesehen von der leicht veränderten Form des Befestigungsabschnittes 18 unterscheidet sich diese Spanneinrichtung 16, die gleichfalls als Spannfutter ausgebildet ist, von der zuvor anhand von Fig. 1 beschriebenen Spanneinrichtung im wesentlichen dadurch, daß zwischen dem Einführabschnitt 24 und dem Halteabschnitt 22 ein konischer Bereich 23 vorgesehen ist, wodurch der Übergang vom Einführabschnitt 24, dessen Innendurchmesser d₂ wiederum etwas größer als der Innendurchmesser d₁ des Halteabschnittes 22 ist, gleichmäßiger gestaltet ist, um das Eingleiten in den thermisch aufgeweiteten Halteabschnitt 22 unter Schwerkrafteinfluß zu erleichtern.

Wiederum ist in Fig. 2 die Durchmesserdifferenz d₂ - d₁ zum Zwecke der Veranschaulichung übertrieben dargestellt.

Obwohl in Fig. 1 und in Fig. 2 lediglich Spanneinrichtungen in Form von Spannfuttern dargestellt sind, versteht es sich, daß die Erfindung gleichwohl geeignet ist, um das Einspannen von Werkzeugen in Spannzangen zu unterstützen, die als Schrumpfspannzangen ausgebildet sind.

## Patentansprüche

1. Vorrichtung zum Spannen von Werkzeugen im Schrumpfsitz, mit
- einer Halterung (14) zur Aufnahme einer Spanneinrichtung (16, 56), wobei die Spanneinrichtung (16, 56) mit ihrer Längsachse (38) im wesentlichen vertikal angeordnet ist und einen Befestigungsabschnitt (18) zur Befestigung der Spanneinrichtung (16, 56) an der Werkzeugmaschine und einen thermisch aufweitbaren Schrumpfabschnitt (20) mit einem Halterabschnitt (22) zur Aufnahme des Werkzeuges (12) im Schrumpfsitz umfaßt,
- einer Heizeinrichtung (42) zur thermischen Aufweitung des Schrumpfabschnittes (20) der Spanneinrichtung (16, 56),
dadurch gekennzeichnet, daß
- die Halterung (14) zur Aufnahme der Spanneinrichtung (16, 56) von oben in einer solchen Stellung ausgebildet ist, daß der Schrumpfabschnitt (20) nach oben weist, und
- am äußeren Ende des Schrumpfabschnittes (20) ein Einführabschnitt (24) vorgesehen ist, der ein Einsetzen des Werkzeuges (12) mit seinem Schaft (13) von oben erlaubt und dessen Innendurchmesser (d₂) derart bemessen ist, daß das Werkzeug (12) im kalten Zustand des Schrumpfabschnittes (20) mit seinem Schaft (13) in den Einführabschnitt (24) einsetzbar und darin zentrierbar ist, so daß das Werkzeug (12) mit seinem Schaft (13) aus dem Einführabschnitt (24) unter Schwerkrafteinfluß in den Halteabschnitt (22) gleitet, sobald dieser ausreichend thermisch aufgeweitet ist.

2. Vorrichtung nach Anspruch 1, dadurch gekennzeichnet, daß der Einführabschnitt (24) über einen konischen Bereich (23) in den Halteabschnitt (22) übergeht.

3. Vorrichtung nach einem der vorhergehenden Ansprüche, gekennzeichnet durch Mittel zum rotierenden Antrieb der Halterung (14) um ihre Längsachse (38).

4. Vorrichtung nach einem der vorhergehenden Ansprüche, gekennzeichnet durch eine Zentrierhilfe (46) für den Werkzeugschaft (13), die oberhalb der Spanneinrichtung (16, 56) positionierbar ist.

## Claims

1. Apparatus for clamping tools with a shrink fit, having
- a mounting (14) for receiving a clamping device (16, 56), whereby the clamping device (16, 56) is disposed with its longitudinal axis (38) substantially vertical and comprises a fastening portion (18) for fastening the clamping device (16, 56) to the machine tool and a thermally expandable shrink portion (20) having a retaining portion (22) for receiving the tool (12) with a shrink fit,
- a heating device (42) for thermally expanding the shrink portion (20) of the clamping device (16, 56),
characterized in that
- the mounting (14) is designed to receive the clamping device (16, 56) from above in such a position that the shrink portion (20) is directed upwards, and
- at the outer end of the shrink portion (20) a lead-in portion (24) is provided, which allows the tool (12) to be inserted by its shank (13) from above and has an inside diameter (d₂) so dimensioned that the tool (12) in the cold state of the shrink portion (20) may be inserted by its shank (13) into the lead-in portion (24) and centred therein, so that the tool (12) under the influence of gravity slides with its shank (13) out of the lead-in portion (24) into the retaining portion (22) as soon as the latter is thermally expanded to a sufficient extent.

2. Apparatus according to claim 1, characterized in that the lead-in portion (24) verges via a ccnical region (23) into the retaining portion (22).

3. Apparatus according to one of the preceding claims, characterized by means of setting the mounting (14) in rotation about its longitudinal axis (38).

4. Apparatus according to one of the preceding claims, characterized by a centring aid (46) for the tool shank (13), which centring aid is positionable above the clamping device (16, 56).

## Revendications

1. Dispositif de serrage d'outil par frettage, comportant
- une fixation (14) destinée à recevoir un dispositif de serrage (16, 56), le dispositif de serrage (16, 56) étant disposé avec son axe longitudinal (38) sensiblement vertical et comprenant un segment de fixation (18) pour la fixation du dispositif de serrage (16, 56) à la machine-outil ainsi qu'un segment resserrable (20) pouvant être élargi thermiquement avec un segment de support (22) destiné à recevoir l'outil (12) serré par frettage,
- un dispositif de chauffage (42) pour l'élargissement thermique du segment resserrable (20) du dispositif de serrage (6, 56)
caractérisé en ce que
- la fixation (14) destinée à recevoir le dispositif de serrage (16, 56) est formée, à partir du haut, dans une position telle que le segment resserrable (20) soit dirigé vers le haut, et
- à l'extrémité extérieure du segment resserrable (20) il est prévu un segment d'introduction (24) qui permet d'insérer l'outil (2) par sa tige (13) à partir du haut et dont le diamètre intérieur (d₂) est tel que l'outil (12) puisse être inséré par sa tige (13) dans le segment d'introduction (24), à l'état froid du segment de retrait (20), et puisse y être centré de manière que l'outil (12) glisse, par sa tige (13), à l'extérieur du segment d'introduction (24) sous l'effet de la force de gravité, dans le segment de support (22), dès que celui-ci est suffisamment élargi thermiquement.

2. Dispositif selon la revendication 1, caractérisé en ce que le segment d'introduction (24) se prolonge dans le segment de support (22), par une zone conique (23).

3. Dispositif selon l'une des revendications précédentes, caractérisé par des moyens d'entraînement en rotation de la fixation (14) autour de son axe longitudinal (38).

4. Dispositif selon l'une des revendications précédentes, caractérisé par un moyen auxiliaire de centrage (46) pour la tige (13) de l'outil qui peut être positionné au-dessus du dispositif de serrage (16, 56).
